# EUROPEAN PATENT APPLICATION

(11) **EP 4 632 445 A1**
(43) Date of publication of application: **15.10.2025**
(21) Application number: 24205902.0
(22) Date of filing: 10.10.2024
(51) Int. Cl.: G02B 5/04, G02B 27/01, G02B 19/00

(54) **OPTICAL ELEMENT, HEAD UP DISPLAY AND VEHICLE**

(30) Priority: 12.04.2024 CN 202410461029
(71) Applicant: Interface Optoelectronics (Shenzhen) Co., Ltd., Shenzhen, Guangdong 518083 (CN); Interface Technology (ChengDu) Co., Ltd., Chengdu City, Sichuan 611731 (CN); General Interface Solution Limited, Miaoli 350 (TW)
(72) Inventor: CHEN, Po-Lun, Shenzhen, 518083 (CN); CHEN, Yun-Pei, Shenzhen, 518083 (CN); CHEN, Yen-Ling, Guangdong, 518083 (CN)
(74) Representative: Metida

(57) **Abstract**

An optical element includes a first microstructure layer, a substrate and a second microstructure layer arranged in sequence. The first microstructure layer includes a plurality of first protrusions, each of the first protrusions comprises a first transparent surface configured for transmitting light. The second microstructure layer includes a plurality of second protrusions, each of the second protrusions comprises a second transparent surface configured for transmitting light. The optical element also includes a plurality of light blocking layers, each of the blocking layers covers a corresponding surface of one of the first protrusions or a surface of one of the second protrusions. The surface covered by the blocking layer intersects with the first transparent surface of the first protrusions or the second transparent surface of the second protrusions. A head up display and a vehicle are further disclosed.

## Description

### FIELD

The subject matter herein generally relates displays, specifically to optical elements, head up displays (HUD) using the optical elements and vehicles using the HUDs.

### BACKGROUND

Conventional HUDs applied to vehicles cannot be sun-dimmed well, which not only affects display effect, but also reduce a service life of the components in the HUD. Existing blocking covers configured for blocking sun light are too large to block the driver's line of sight and affecting the image light emitting from the HUDs.

Therefore, there is room for improvement within the art.

### BRIEF DESCRIPTION OF THE DRAWINGS

FIG. 1 is a view showing an optical element according to the present disclosure.
FIG. 2 is a cross-sectional view of the optical element of FIG. 1.
FIG. 3 is a partial cross-sectional view of an optical element according to another embodiment of the present disclosure.
FIG. 4 is a partial cross-sectional view of an optical element according to another embodiment of the present disclosure.
FIG. 5 is a view of optical path of the optical element according to the present disclosure.
FIG. 6 is a view of optical path of the optical element according to a comparative embodiment.
FIG. 7 is a view of hard coating film according to an embodiment of the present disclosure.
FIG. 8 is a view of antireflection film according to an embodiment of the present disclosure.
FIG. 9 is a flow chart of an optical element manufacture method of the present disclosure.
FIG. 10 is a cross-sectional view of steps of the optical element manufacture method in FIG.9.
FIG. 11 is a view of a head up display according to the present disclosure.
FIG. 12 is a view of a vehicle according to the present disclosure.

### DETAILED DESCRIPTION

Implementations of the disclosure will now be described, by way of embodiments only, with reference to the drawings. The disclosure is illustrative only, and changes may be made in the detail within the principles of the present disclosure. It will be appreciated that the embodiments may be modified within the scope of the claims.

Unless otherwise defined, all technical terms used herein have the same meaning as commonly understood by one of ordinary skill in the art. The technical terms used herein are to provide a thorough understanding of the embodiments described herein, but are not to be considered as limiting the scope of the embodiments. The term "comprising," when utilized, means "including, but not necessarily limited to"; it specifically indicates open-ended inclusion or membership in the so-described combination, group, series, and the like.

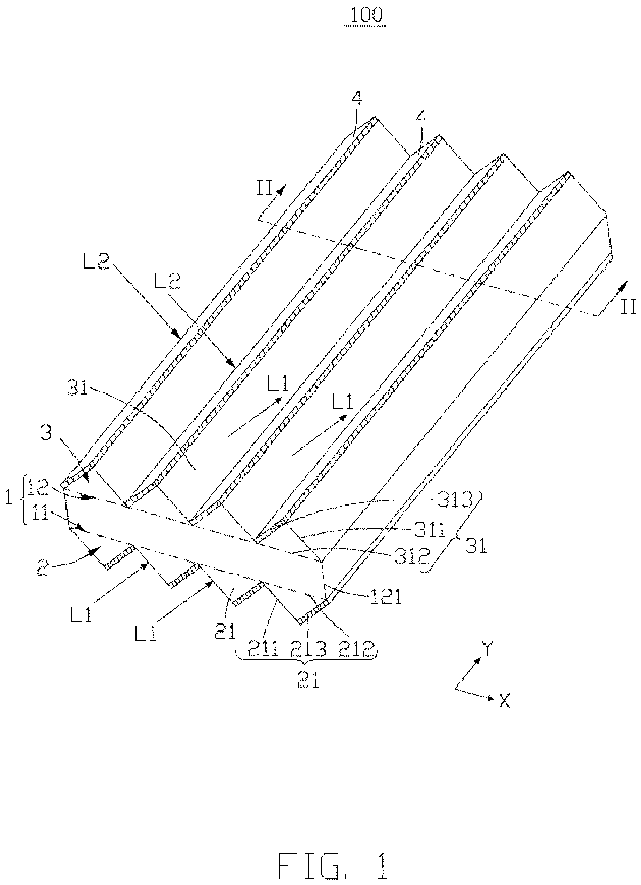

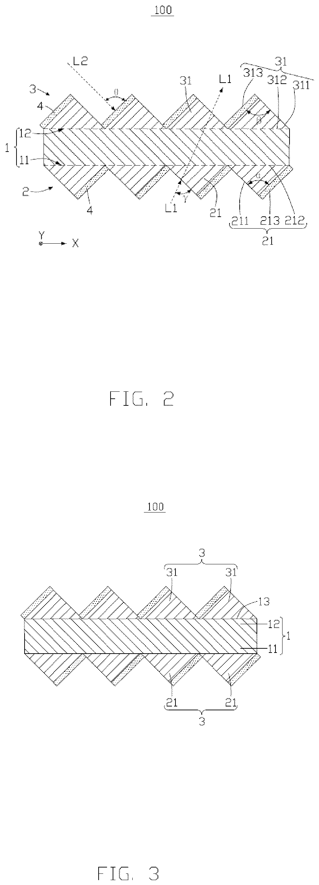

FIG. 1 and FIG. 2 illustrate an optical element 100 according to an embodiment of the present disclosure. The optical element 100 includes a substrate 1, a first microstructure layer 2, a second microstructure layer 3, and a plurality of light blocking layers 4. The substrate 10 includes a lower surface 11 and an upper surface 12 opposite to the lower surface 11.

The first microstructure layer 2 sets on the lower surface 11 of the substrate 1, and the first microstructure layer 2 includes a plurality of first protrusions 21 protruding from the substrate 1 toward a side away from the substrate 1. Each of the first protrusions 21 includes a first transparent surface 211 configured for transmitting light.

The second microstructure layer 3 sets on the upper surface 12 of the substrate 1. The second microstructure layer 3 includes a plurality of second protrusions 31 protruding from the substrate 1 toward a side away from the substrate 1. Each of the second protrusions 31 includes a second transparent surface 311 configured for transmitting light. The first transparent surface 211 is approximately parallel to the second transparent surface 311.

Each of the light blocking layers 4 partially covers a corresponding surface of one of the first protrusions 21 or a corresponding surface of one of the second protrusions 31. The light blocking layers 4 are used to blocking a portion of light incident on the optical element 100 from passing through the optical element 100.

**The** optical element 100 of the present disclosure, by setting the first microstructure layer 2 on the lower surface 11 of the substrate 1, and setting the second microstructure layer 3 on the upper surface 12 of the substrate 1, and setting the first transparent surfaces 211 are approximately parallel to the second transparent surfaces 311. So that light incident on the lower surface 11 can emit from the upper surface 12 in the same direction. By setting each of the light blocking layers 4 partially covers a corresponding surface of one of the first protrusions 21 or a corresponding surface of one of the second protrusions 31. A portion of light incident on the optical element 100 can be blocked, so that directions of light incident on the optical element 100 can be controlled to reduce interference between light incident from the upper surface 12 and light incident from the lower surface 11.

**The** substrate 1, the first microstructure layer 2 and the second microstructure layer 3 are all made of light-transmitting materials, so that an image light L1 incident from the lower surface 11 of the first microstructure layer 2 can pass through the substrate 1 and the upper surface 12 of the second microstructure layer 3. The term "light-transmitting" in the present disclosure means a high transmittance of light at wavelengths of specific bands (especially visible and infrared wavelengths), for example, the transmittance of light of specific band is more than 70%, or even more than 80%.

A material of the substrate 1 can be polyethylene glycol terephthalate (PET), polycarbonate (PC), polymeric methyl methacrylate (PMMA), colorless polyimide (CPI), special acrylic plastics (such as AZP resin), cycloolefin copolymer (COC), or other optical polymer transparent film substrates. Materials of the first microstructure layer 2 and the second microstructure layer 3 can be the same as the materials of substrate 1, and can also be other materials, such as thermal curable materials or ultraviolet curable materials, or Acrylic, silicone type curable materials, or organic and inorganic composite materials (for example, acrylic and silicone copolymers, namely Acrylic & SiO-copolymer), etc.

In this embodiment, the substrate 1 is substantially rectangular and is flat and thin. Each of the first protrusions 21 and each of the second protrusions 31are both triangular prisms. Each of the first protrusions 21 extends along a first direction X, and each of the first transparent surfaces 211 is parallel to the first direction X. The plurality of first protrusions 21 are distributed continuously and without intervals and breaks along a second direction Y intersecting with the first direction X. In other embodiments, intervals and breaks may exist in adjacent first protrusions 21, that is, the plurality of first protrusions 21 are distributed discontinuously and at intervals along the second direction Y on the lower surface 11. The distribution of the plurality of first protrusions 21 are decided by a requirement of the use of optical element 100.

Each of the second protrusions 31 extends along the first direction X, and each of the second transparent surfaces 311 is parallel to the first direction X. The plurality of second protrusions 31 are distributed continuously and without intervals and breaks along the second direction Y on the upper surface 12. In this embodiment, the first direction X and the second direction Y are perpendicular to each other. In other embodiments, an angle between the first direction X and the second direction Y can be other angles.

**In** other embodiments, shapes of each first protrusions 21 and each second protrusions 31 are not limited, as long as the optical element 100 can partially transmit the image light L1 incident from the lower surface 11, and partially reflect or adsorb an ambient light L2. In addition to the triangular prism, each first protrusions 21 and each second protrusions 31 may also be strip protrusions structures with other sectional shapes. For example, cross sections of each first protrusions 21 and each second protrusions 31 along the direction of the thickness of the optical element 100 may be rectangular, trapezoidal, elliptical, semi-circular, etc. Compared with other irregular cross section shapes, when the cross section of each first protrusions 21 and each second protrusions 31 is triangular, rectangular, trapezoidal, elliptical, semi-circular and other regular shapes, it is conducive to processing.

**In** this embodiment, the substrate 1 is integrally formed with the first protrusions 21, and the substrate 1 is integrally formed with the second protrusions 31. That is, there is no boundary between the substrate 1 and the first protrusions 21 and the second protrusions 31 on either side. Specifically, the substrate 1 and the first protrusions 21 and the second protrusions 31 can be formed in one piece by means of hot stamping, injection molding and UV adhesive stamping. The strength of the first protrusions 21 and the second protrusions 31 can be improved by one-piece molding. On the one hand, the process can be simplified, and on the other hand, there is no obvious interface between the substrate 1 and the first protrusions 21 and the second protrusions 31, which will not affect the optical path of the optical element 100, so as to improve a durability of the microstructure layer.

**As** FIG. 3 shows, in another embodiment, the substrate 1 and the first protrusions 21 and the second protrusions 31 may be non-monolithic. There is a boundary between the substrate 1 and the first protrusions 21 and the second protrusions 31. Specifically, the first protrusions 21 and the second protrusions 31 are formed by one of the means of laser processing, lithography or nanoimprint. The first microstructure layer 2 and the second microstructure layer 3 are formed by laser processing. For example, firstly, a material layer is formed on the substrate 1, and then the material layer is processed by laser, so that part of the material layer is removed and part of the material layer is retained, so as to obtain the first microstructure layer 2 or the second microstructure layer 3. The steps of forming the first microstructure layer 2 and the second microstructure layer 3 by laser treatment are simple.

As FIG. 1 shows, the first protrusion 21 further comprises a first side surface 212 and a second side surface 213. The first side surface 212, the second side surface 213 and the first transparent surface 211 are connected in sequence. All of the first side surface 212, the second side surface 213 and the first transparent surface 211 are quadrilateral. The first side surface 212 is in direct contact with the substrate 1, the corresponding one of the plurality of light blocking layers 4 covers the second side surface 213.

Since the second side surface 213 is provided with the blocking layer 4, in order to facilitate the processing of the blocking layer 4 on the second side surface 213 and resulting the optical element 100 is relatively uniform in thickness. A surface roughness Rq1 of the second surface side 213 ranges from 0.2µm to 30µm (e.g., 0.2µm to 2µm, 2µm to 10µm, 10µm to 15µm, 15µm to 30µm) when processing the first protrusions 21. A surface roughness Rq2 of the first transparent surface 211 is less than 0.05µm, so that a surface quality of the optical element 100 can be improved effectively and the thickness of optical element 100 is uniform. In addition, a surface roughness Rq20 of a side surface 121 of the substrate 1 of the optical element 100 is less than 50µm to meet processing needs. Define an angle between the first transparent surface 211 and the second side surface 213 as a first angle α, the first angle α ranges from 30° to 150° (e.g., 30° to 50°, 50° to 70°, 70° to 90°, 90° to 120°, 120° to 150°). The first angle α within the range can ensure that the light incident from the side of the lower surface 11 can emit from the side of the upper surface 12 as much as possible, and can make the light incident from the second side 213 of the lower surface 11 is effectively blocked. The lower surface 11 of the substrate 1 and the first side surface 212 is notional planes when the substrate 1 is integrally formed with the first protrusions 21.

Each of the second protrusions 31 further comprises a third side surface 312 and a forth side surface313. The third side surface 312, the forth side surface 313 and the second transparent surface 311 are connected in sequence all of the third side surface 312, the forth side surface 313 and the second transparent surface 311 are quadrilateral. The third side surface 312 is in direct contact with the substrate 1, the corresponding one of the plurality of light blocking layers 4 covers the forth side surface 313.

Since the forth side surface 313 is provided with the blocking layer 4, in order to facilitate the processing of the blocking layer 4 on the forth side surface 313 and resulting the optical element 100 is relatively uniform in thickness. A surface roughness Rq3 of the forth side surface 313 ranges from 0.2µm to 30µm (e.g., 0.2µm to 2µm, 2µm to 10µm, 10µm to 15µm, 15µm to 30µm) when processing the second protrusions 31. A surface roughness Rq4 of the second transparent surface 311 is less than 0.05µm, so that a surface quality of the optical element 100 can be improved effectively and the thickness of optical element 100 is uniform. Define an angle between the second transparent surface 311 and the forth side surface 313 as a second angle β, the second angle β ranges from 30° to 150° (e.g., 30° to 50°, 50° to 70°, 70° to 90°, 90° to 120°, 120° to 150°). The second angle β within the range can ensure that the light incident from the side of the lower surface 11 can emit from the side of the upper surface 12 as much as possible, and can make the light incident from the second side 213 of the lower surface 11 is effectively blocked. The upper surface 12 of the substrate 1 and the third side surface 312 is notional planes (shown by a dotted line in FIG. 1) when the substrate 1 is integrally formed with the second protrusions 31.

Each of the plurality of blocking layers 4 is quadrilateral, and completely cover the second side surface 213 of the first protrusions 21 and the fourth side surface 313 of the second protrusions 31. The second side surface 213 is approximately parallel to the fourth side surface 313. In other embodiments, the blocking layer 4 may partially cover the second side surface 213 of the first protrusions 21 and the fourth side surface 313 of the second protrusions 31, the second side surface 213 may not be parallel the forth side surface 313.

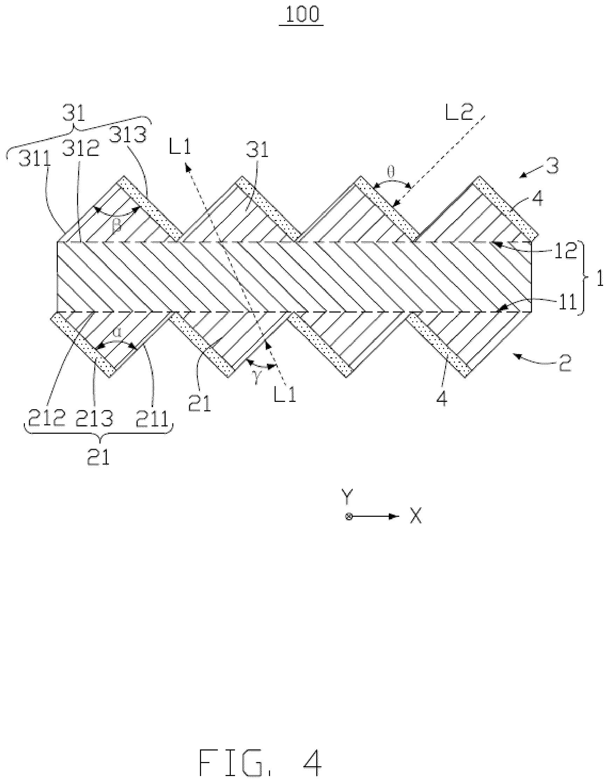

A position relationship of the first side surface 212, the second side surface 213 with the blocking layer 4 and the first transparent surface 211 shall be determined according to specific use needs. The third side surface 312, the fourth side surface 313 with the blocking layer 4 and the second transparent surface 311 shall also be determined according to the specific use needs. For example, in order to better block the incoming light from the upper surface 12, the position of the fourth side surface 313 and the second side surface 213 with the blocking layer 4 can be adjusted. Referring to FIG. 4, in another embodiment, the first transparent surface 211 is located on a side of each first protrusions 21 near the first direction X, and the second side surface 213 provided with the blocking layer 4 is located on a side of each first protrusions 21 away from the first direction X. The second light transparent surface 311 is located on aside of each second protrusions 31 away from the first direction X, and the fourth side surface 313 with the blocking layer 4 is located on a side of each second protrusions 31 near the first direction X.

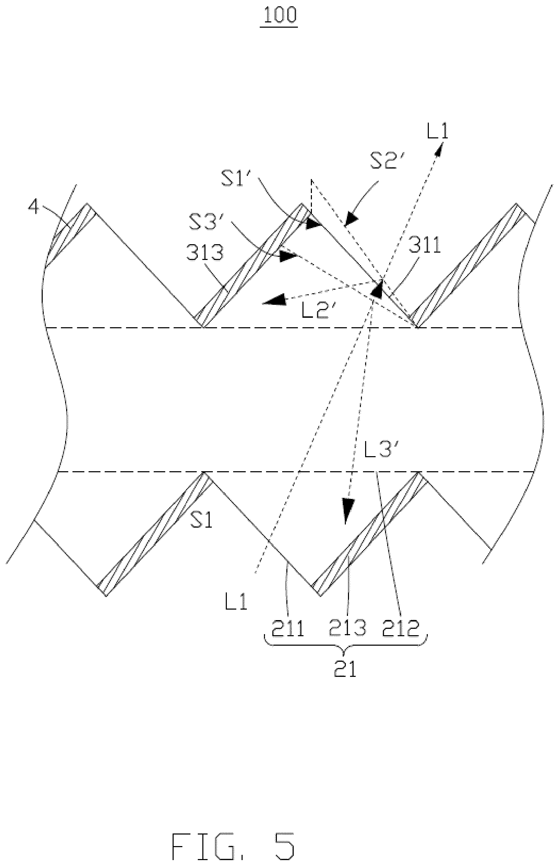

Please refer to FIG. 5. To achieve better light transmittance, in this embodiment, the first transparent surface 211 is parallel to the second transparent surface 311. In other embodiments, due to possible errors during the processing, the first transparent surface 211 and the second transparent surface 311 may not be strictly parallel (i.e., approximately parallel is also acceptable). A parallelism error between the first transparent surface 211 and the second transparent surface 311 is less than 0.2°, where the term "parallelism" refers to a degree of parallelism between the first transparent surface 211 and the second transparent surface 311. For example, if the second transparent surface 311 shifts from a position S1' to a position S2' or S3', an incident angle of the image light L1 relative to the interface of the second protrusion 31 and the external environment will change, affecting the refraction ratio of the image light L1 at the interface, thus impacting the light efficiency of the optical element 100.

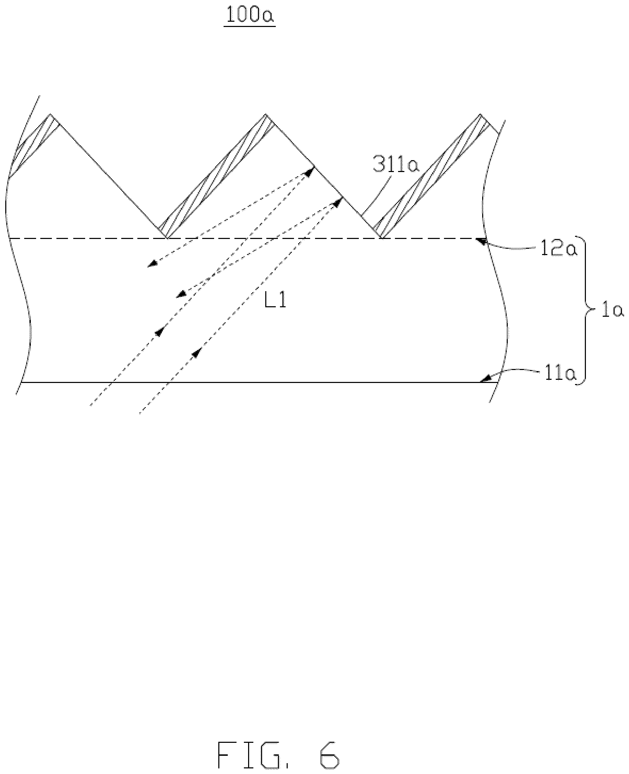

FIG. 6 is a schematic structural diagram of a comparative embodiment optical element 100a. The main difference between the comparative optical element 100a and all the embodiments of the present disclosure is that no first protrusions are set on a side of the lower surface 11a of the substrate 1a. The lower surface 11a of the substrate 1a is a first transparent surface of the optical element 100a. In this comparative embodiment, since no first transparent surface parallel to the second transparent surface 311a on a upper surface 12a side is set on a side of the lower surface 11a of the substrate 1a, the lower surface 11a and a second transparent surface 311a on the upper surface 12a are not parallel and have a large angle. This causes most of the light incident from the lower surface 11a to be reflected back to the lower surface 11a by the second transparent surface 311a, with only a very small portion emitted from the second transparent surface 311a, affecting the refraction ratio of the light incident from the lower surface 11a, thus reducing light efficiency. However, in the embodiments of the present disclosure, when the parallelism error between the first transparent surface 211 and the second transparent surface 311 is less than 0.2°, the transmittance of the image light L1 is high, which does not affect the refraction ratio of the optical element 100, thus not impacting the light efficiency of the optical element 100.

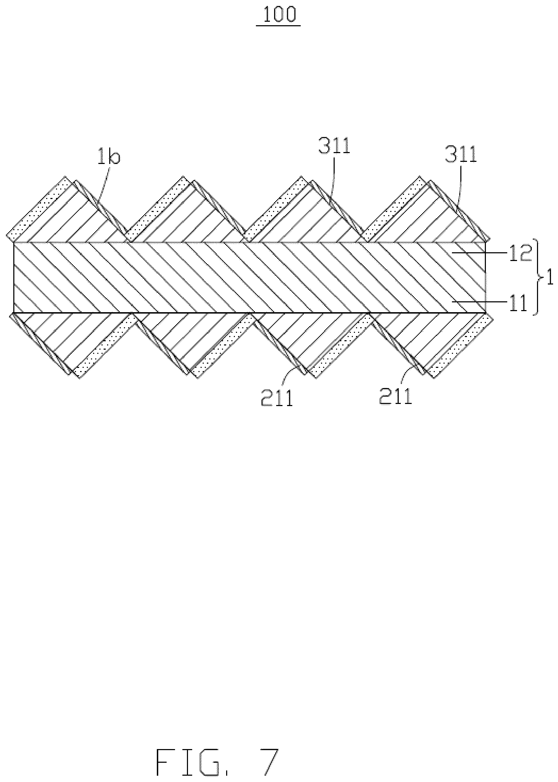

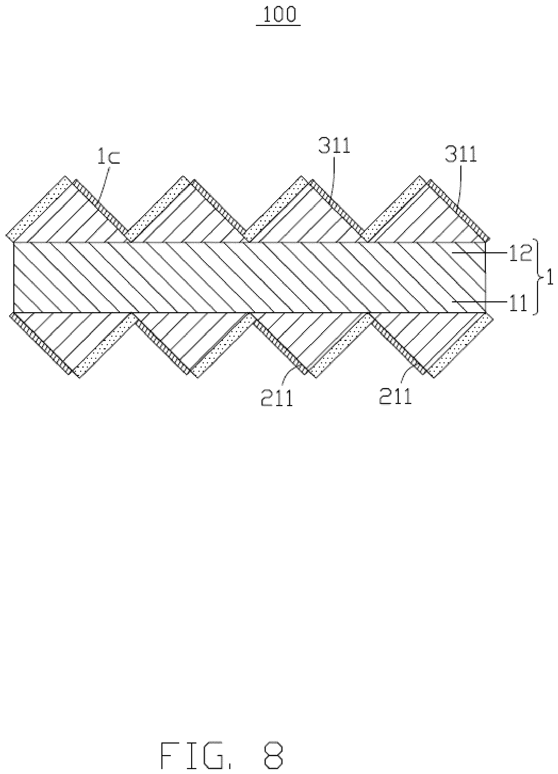

In addition, please refer to FIG. 7 and FIG. 8. In other embodiments, to achieve better transmittance, on the basis that the first transparent surface 211 is parallel to the second transparent surface 311, a hard coating 1b or an antireflection coating 1c is provided on a side of the first transparent surface 211 away from the substrate 1. The hard coating 1b or the antireflection coating 1c is used to increase the transmittance of light incident on the first transparent surface 211. The hard coating 1b or the antireflection coating 1c is also provided on a side of the second transparent surface 311 away from the substrate 1. The hard coating 1b or the antireflection coating 1c is used to increase the transmittance of light incident on the second transparent surface 311. For example, when an antireflection coating 1c is provided on the side of the first transparent surface 211 away from the substrate 1, and an antireflection coating 1c is also provided on the side of the second transparent surface 311 away from the substrate 1, the antireflection coatings 1c can select an absolute reflectance Rabs of less than 2% and an average reflectance Ravg of less than 1% when the light wave has a wavelength of 420nm-760nm. Which helps to reduce the scattering phenomenon of light incident on the first transparent surface 211 and the second transparent surface 311.

Please refer to FIG. 2. The light blocking layer 4 can be any of ultraviolet absorbers, light-shielding inks, photoresists, and light-shielding tapes. In the case where the light blocking layer 4 is an ultraviolet absorber, the ambient light L2 incident on the light blocking layer 4 is at least partially absorbed and attenuated. Additionally, when the light blocking layer 4 is made of light-shielding ink, the light-shielding ink either reflects the light back to its original path or absorbs it directly when illuminated. The light-shielding ink is made from ultrafine glass powder. When the light blocking layer 4 is a photoresist, the light is absorbed when it illuminates the photoresist. The photoresist mainly consists of three components: resin, sensitizer, and solvent. The photoresist usually has a strong ability to absorb light in the ultraviolet wavelength range or smaller wavelengths (less than 400nm). Understandably, the material of the light blocking layer 4 is not limited to the aforementioned materials. The material of the light blocking layer 4 can be any material capable of absorbing ambient light L2 in specific wavelength ranges, or other materials with an Optical Density (OD) range of 3-5. Alternatively, the material of the light-shielding layer 4 can be made of any material capable of reflecting ambient light L2 in specific wavelength ranges.

The optical element 100 provided by the present disclosure. By respectively setting a first microstructure layer 2 and a second microstructure layer 3 on the lower surface 11 and the upper surface 12 of the substrate 1, and by setting the first transparent surface 211 of the first microstructure layer 2 being approximately parallel to the second transparent surface 311 of the second microstructure layer 3, ensuring that the propagation direction of light emitted from the upper surface 12 is the same as the propagation direction of light incident from the lower surface 11. By setting each light blocking layers 4 to partially cover the surface of a first protrusion 21 or a second protrusion 31, it can effectively block part of the light irradiating the optical element 100 from passing through the optical element 100. Which helps to reduce the interference between the light incident from the upper surface 12 and the light incident from the lower surface 11.

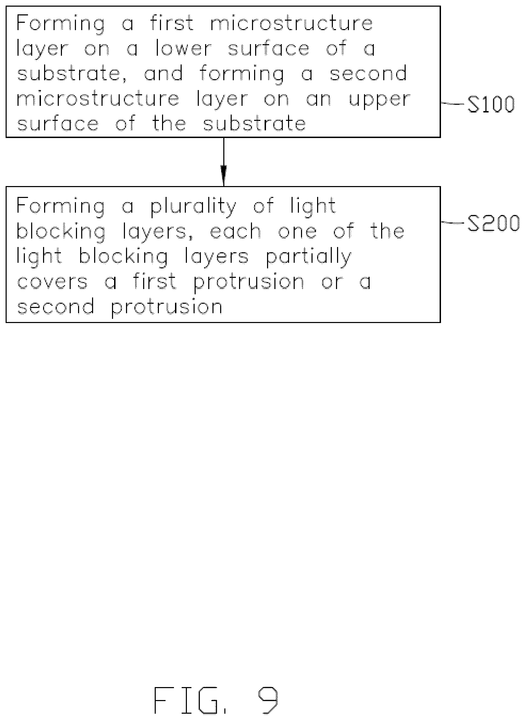

Referring to FIG. 9, a flowchart of an example method for manufacturing method of optical element is shown. The example method is provided by way of example, as there are a variety of ways to carry out the method. The method described below can be carried out using the configurations illustrated in FIGS. 1 through 8, for example, and various elements of these figures are referenced in explaining example method. Each block shown in FIG. 9 represents one or more processes, methods, or subroutines, carried out in the exemplary method. Additionally, the illustrated order of blocks is by example only and the order of the blocks can change according to the present disclosure. The exemplary method can begin at block S100.

At block S100, a first microstructure layer and a second microstructure layer are formed on a lower surface and an upper surface of a substrate, respectively.

At block S200, multiple light blocking layers are formed, each light blocking layer partially covers one of the first protrusions or one of the second protrusions.

Please refer to FIG. 1. The first microstructure layer 2 includes multiple first protrusions 21 that contact the substrate 1 and protrude away from the substrate 1. The second microstructure layer 3 includes multiple second protrusions 31 that contact the substrate 1 and protrude away from the substrate 1. Block S100 further includes: block S101: forming the first microstructure layer 2 and the second microstructure layer 3 by any one of the following methods: laser processing, photolithography, or nanoimprinting.

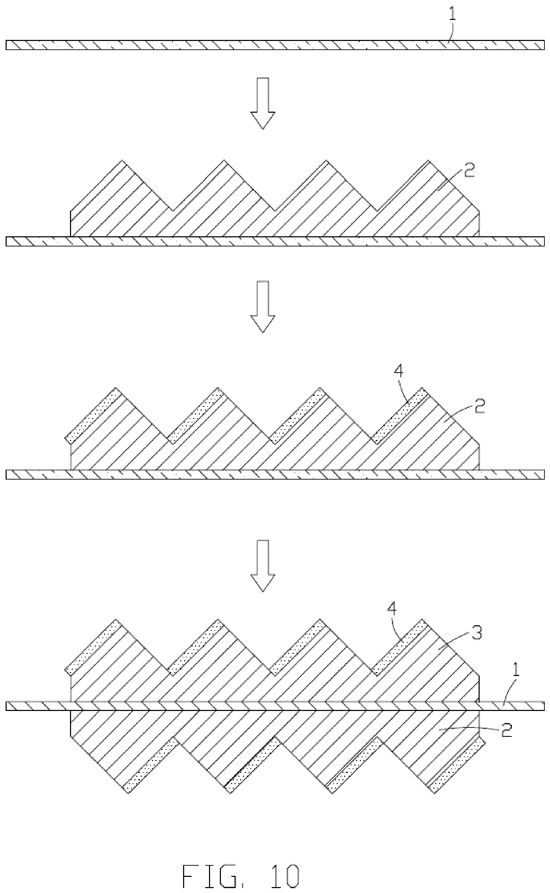

Specifically, please refer to FIG. 10, the first microstructure layer 2 and the second microstructure layer 3 are formed using laser processing. For example, the laser processing includes forming material layers for the first microstructure layer 2 and the second microstructure layer 3 on the substrate 1, and then using a laser to process these material layers. The processing removes portions of the material layers while retaining other portions, thereby creating the first microstructure layer 2 and the second microstructure layer 3. The substrate 1, the first microstructure layer 2, and the second microstructure layer 3 are then bonded together using an adhesive. Additionally, in other embodiments, material layers for both the first microstructure layer 2 and the second microstructure layer 3 can be formed simultaneously on both sides of the substrate 1. The material layers are then processed using a laser to remove portions of the material layers while retaining other portions, thereby creating the first microstructure layer 2 and the second microstructure layer 3. The method of forming the first microstructure layer 2 and the second microstructure layer 3 using laser processing is straightforward.

Using photolithography (also known as optical lithography) to form the first microstructure layer 2 and the second microstructure layer 3, the process includes forming a patterned photoresist layer on the material layer where the first microstructure layer 2 or the second microstructure layer 3 is to be formed. The patterned photoresist layer is then used to pattern the material layer to create a relief structure, thereby forming the first microstructure layer 2 or the second microstructure layer 3. The method involves photolithography equipment and thus is relatively expensive.

Using nanoimprinting to form the first microstructure layer 2 and the second microstructure layer 3, the process includes coating the substrate 1 with a material layer intended for the microstructure layers. A mold with a relief structure is then placed on this material layer, followed by ultraviolet exposure or heating to cure the material layer. After demolding, the structure including the substrate 1, the first microstructure layer 2, and the second microstructure layer 3 is formed. Compared to photolithography, nanoimprinting technology has the advantages of reducing production costs and complexity.

Additionally, the first microstructure layer 2 and the second microstructure layer 3 are directly formed on the substrate 1, rather than being glued to it. Since adhesives generally have poor heat resistance and thermal conductivity, the optical element 100 in this embodiment has better heat dissipation and thermal resistance. Moreover, forming the first microstructure layer 2 and the second microstructure layer 3 directly on the substrate 1 reduces the thickness of the optical element 100 and lowers costs, while also minimizing the refractive effects of the adhesive layer on the optical path.

Block S200 further includes: block S201: forming the light blocking layer 4 by any one of the following methods: coating, film deposition, atomization, spraying, or sputtering. For example, when the light blocking layer 4 is formed by atomization, the material of the light blocking layer can be atomized light-shielding ink or light-shielding tape. The total integrated scattering (TIS) value of the light blocking layer 4 needs to be less than 0.5 to prevent light incident on the light blocking layer from scattering.

The light blocking layer 4 can be any of ultraviolet absorbers, light-shielding inks, photoresists, and light-shielding tapes. In the case where the light blocking layer 4 is an ultraviolet absorber, the ambient light L2 incident on the light blocking layer 4 is at least partially absorbed and attenuated. Additionally, when the light blocking layer 4 is light-shielding ink, the light-shielding ink either reflects the light back to its original path or absorbs it directly when illuminated. The light-shielding ink is made from ultrafine glass powder. When the light blocking layer 4 is a photoresist, the light is absorbed when it illuminates the photoresist. The photoresist mainly consists of three components: resin, sensitizer, and solvent. The photoresist usually has a strong ability to absorb light in the ultraviolet wavelength range or smaller wavelengths (less than 400nm). Understandably, the material of the light blocking layer 4 is not limited to the aforementioned materials. The material of the light blocking layer 4 can be any material capable of absorbing ambient light L2 in specific wavelength ranges, or other materials with an Optical Density (OD) range of 3-5. Alternatively, the material of the light-shielding layer 4 can be any material capable of reflecting ambient light L2 in specific wavelength ranges.

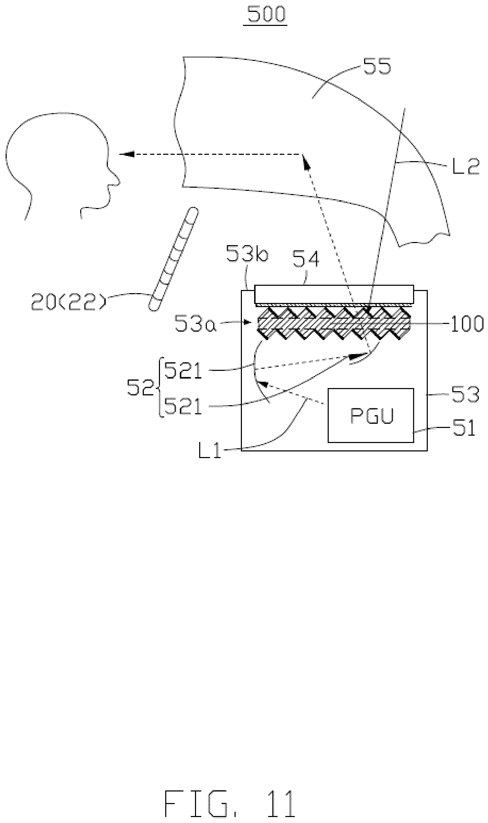

Please refer to FIG. 11. A head-up display device 500 in this embodiment includes the optical element 100 as described in any of the previous embodiments, an image generation unit 51, and a light guide assembly 52. The image generation unit 51 is used to emit the image light L1. The light guide assembly 52 is used to receive and guide the image light L1 to the optical element 100. The optical element 100 is used to receive the image light L1 emitted by the light guide assembly 52 and emit the image light L1 to the projection medium 55 for imaging.

The head-up display device 500 provided in this embodiment effectively blocks ambient light L2 and the emitted image light L1 by incorporating the optical element 100 described in any of the previous embodiments. Which helps to reduce the interference between the ambient light L2 and the image light L1, thereby improving the light efficiency of the image light L1 in the head-up display device 500. Additionally, it prevents sunlight from entering the head-up display device 500, effectively slowing down the aging of internal components of the head-up display device 500, and thus helps to extend the lifespan of the head-up display device 500.

The head-up display device 500 also includes a housing 53 with an accommodating cavity 53a. The housing 53 includes a light exit port 53b, where a transparent cover 54 is installed. The optical element 100 is positioned on the side of the transparent cover 54 closer to the image generation unit 51. Specifically, the optical element 100 can be attached to both sides of the housing 53. Then, the transparent cover 54 is assembled with the housing 53. By adjusting the position of the mirror 521 in the light guide assembly 52, the angle at which the image light L1 is incident on the optical element 100 is adjusted to ensure that the image projected onto the projection medium 55 is clear and complete.

The projection medium 55 is used to receive part of the image light L1 emitted from the optical element 100 and form a virtual image on the side of the projection medium 55 away from the user. In this embodiment, the projection medium 55 is a windshield. Specifically, the structure of the projection medium 55 can consist of an inner and outer layer of glass, or it can be a single layer of glass. An interlayer film can be added between the inner and outer layers of glass to eliminate ghosting according to the user's needs, making the glass thicker at the top and thinner at the bottom to achieve clearer imaging. In other embodiments, the projection medium 55 can also be a semi-reflective and semi-transmissive receiving screen, without limitation in the present disclosure.

**In** this embodiment, the head-up display device 500 is a windshield-type head-up display device. In other embodiments, the head-up display device 500 can also be a combination head-up display device, an augmented reality head-up display device, or a holographic projection head-up display device. For example, when the head-up display device 500 is a combination head-up display device, the projection medium 55 can be a semi-reflective and semi-transmissive receiving screen. When the head-up display device 500 is a holographic projection head-up display device, the light guide assembly 52 can be a holographic lens, and the projection medium 55 can be a planar lightwave guide. The ultra-thin structure and two-dimensional pupil expansion capability of the planar lightwave guide can reduce the volume of the head-up display device. Additionally, when the head-up display device 500 is a holographic projection head-up display device, the image generation unit 51 can also include a light source, a spatial light modulation assembly, a projection lens, and a Computer Generated Holography (CGH) device. The CGH device computes the position of the holographic image in real time. The spatial light modulation assembly is used to phase modulate the light emitted by the light source and focus the modulated light beam onto the focal plane of the projection lens, forming the holographic image to be projected. The projection lens then projects the holographic image onto the projection medium 55 through the optical element 100. The image generation unit 51 can also include a light source (not shown) for generating the image light L1, such as a light-emitting diode (LED), organic light-emitting diode (OLED), or micro light-emitting diode (micro LED), without limitation in the present disclosure.

Please refer to FIG. 4 and FIG. 11. A plurality of first protrusions 21 of the optical element 100 are distributed continuously and without gaps along the lower surface 11 in the second direction Y. A plurality of second protrusions 31 are distributed continuously and without gaps along the upper surface 12 in the second direction Y. The first direction X intersects with the second direction Y and both are in the same plane. The first protrusions 21 of the optical element 100 are prismatic and also include a first side surface 212 and a second side surface 213. The first side surface 212, the second side surface 213, and the first transparent surface 211 are sequentially connected. All three surfaces are quadrilateral. The first side surface 212 is in direct contact with the substrate 1, and the second side surface 213 is provided with a light blocking layer 4.

The second protrusions 31 are prismatic and also include a third side surface 312 and a fourth side surface 313. The third side surface 312, the fourth side surface 313, and the second transparent surface 311 are sequentially connected. All three surfaces are quadrilateral. The third side surface 312 is in direct contact with the substrate 1, and the fourth side surface 313 is provided with a light blocking layer 4. It should be noted that in FIG. 1, the first side surface 212 and the third side surface 312 are notional planes (shown in dashed lines) and not actual interfaces.

Each light blocking layers 4 is rectangular and completely covers the second side surface 213 of the first protrusion 21 and the fourth side surface 313 of the second protrusion 31. The second side surface 213 and the fourth side surface 313 are approximately parallel. In other embodiments, the light blocking layer 4 can partially cover the second side surface 213 of the first protrusion 21 and the fourth side surface 313 of the second protrusion 31, and the second side surface 213 and the fourth side surface 313 may not be parallel.

An angle between the incident image light L1 and the first transparent surface 211 of the optical element 100 is defined as a third angle γ. A range of the third angle γ is 5° to 150° (e.g., 5° to 30°, 30° to 50°, 50° to 70°, 70° to 90°, 90° to 120°, 120° to 150°), ensuring that most of the image light L1 incident on the optical element 100 can be transmitted through the first transparent surface 211. An angle between the incident ambient light L2 and the fourth side surface 313 of the optical element 100 is defined as a fourth angle θ. A range of the fourth angle θ is 5° to 150° (e.g., 5° to 30°, 30° to 50°, 50° to 70°, 70° to 90°, 90° to 120°, 120° to 150°), ensuring that the amount of incident ambient light L2 is reduced without interfering with the amount of image light L1 emitted.

The head-up display device 500 provided in this embodiment, by incorporating the optical element 100 described in any of the previous embodiments, can effectively block ambient light L2 and emitted image light L1. Which helps to reduce the interference between ambient light L2 and image light L1, improving the light efficiency of the image light L1 in the head-up display device 500. It also helps to prevent sunlight from entering the head-up display device 500, effectively slowing down the aging of the internal components of the head-up display device 500, thereby extending the lifespan of the head-up display device 500.

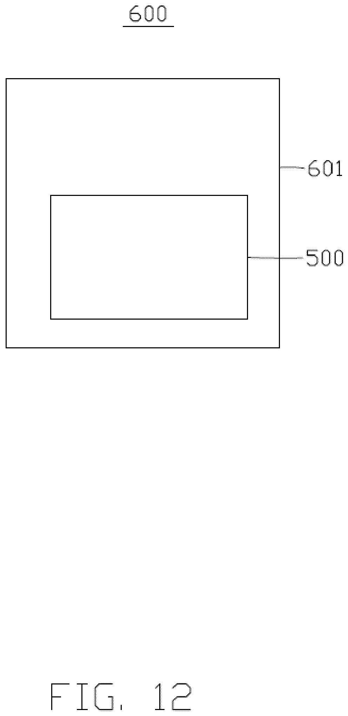

Please refer to FIG. 12. A vehicle 600 in this embodiment includes a body 601 and the head-up display device 500 described in any of the previous embodiments, with the head-up display device 500 installed on the body 601. The vehicle 600 can be any type of electric car, gasoline car, or diesel car, without limitation in this application. Specifically, the head-up display device 500 uses the principle of optical reflection to project important driving-related information (such as driving speed, battery voltage, water tank temperature, engine speed, fuel consumption, navigation route, etc.) onto the projection medium 55. The information is reflected into the driver's eyes, aiding the driver in operating the vehicle 600. The setup helps to prevent the driver from being distracted by looking down at the dashboard while driving, thereby improving driving safety and enhancing the overall driving experience.

The vehicle 600 provided in this embodiment, by incorporating the head-up display device 500 described in any of the previous embodiments, helps to prevent sunlight from entering the interior of the vehicle 600. Which effectively slows down the aging of the internal components of the vehicle 600, thereby extending the lifespan of the vehicle 600 and improving the driving experience.

In at least one embodiment, the optical element 100 characterised in that a hard coating or an anti-reflection coating is arranged on a side of the first transparent surface 211 away from the substrate 1; the hard coating or the anti-reflection coating is used to increase the transmittance of light irradiated on the first transparent surface 211; a hard coating or an anti-reflection coating is also arranged on a side of the second transparent surface 311 away from the substrate 1; the hard coating or the anti-reflection coating is used to increase the transmittance of light irradiated on the second transparent surface 311.

While the present disclosure has been described with reference to particular embodiments, the description is illustrative of the disclosure and is not to be construed as limiting the disclosure. Therefore, those of ordinary skill in the art can make various modifications to the embodiments without departing from the scope of the disclosure as defined by the appended claims.

## Claims

1. An optical element (100) comprising:
a substrate (1) comprising a lower surface (11) and an upper surface (12) opposite to the lower surface (11);
a first microstructure layer (2) on the lower surface (11) of the substrate (1), the first microstructure layer (2) comprising a plurality of first protrusions (21) protruding from the substrate (1) toward a side away from the substrate (1); each of the plurality of first protrusions (21) comprising a first transparent surface (211) configured for transmitting light;
a second microstructure layer (3) on the upper surface (12) of the substrate (1), the second microstructure layer (3) comprising a plurality of second protrusions (31) protruding from the substrate (1) toward a side away from the substrate (1); each of the plurality of second protrusions (31) comprising a second transparent surface (311) configured for transmitting light; and
a plurality of light blocking layers (4), each of the plurality of blocking layers (4) covering a corresponding surface of one of the plurality of first protrusions (21) or a surface of one of the plurality of second protrusions (31); the light blocking layers (4) configured for blocking a portion of light incident on the optical element (100) from passing through the optical element (100);
wherein the surface of each one of the plurality of first protrusions (21) covered by the blocking layer (4) intersects with the corresponding first transparent surface (211) of the same first protrusion (21); the surface of each one of the plurality of second protrusions (31) covered by the blocking layer (4) intersects with the corresponding second transparent surface (311) of the plurality of second protrusions (31).

2. The optical element (100) of claim 1, **characterised in that** each one of the first protrusions (21) extends along a first direction (X), and the plurality of first protrusions (21) are distributed continuously along a second direction (Y) intersecting with the first direction (X) on the lower surface (11); each of the first transparent surface (211) is parallel to the first direction (X); each one of the plurality of second protrusions (31) extends along the first direction (X), and the plurality of second protrusions (31) are distributed continuously along the second direction (Y) on the upper surface (12); each of the second transparent surface (311) is parallel to the first direction (X).

3. The optical element (100) of claim 2, **characterised in that** each of the plurality of first protrusions (21) is a triangular prism, and the first protrusion (21) further comprises a first side surface (212) and a second side surface (213); the first side surface (212), the second side surface (213) and the first transparent surface (211) are connected in sequence; all of the first side surface (212), the second side surface (213) and the first transparent surface (211) are quadrilateral; the first side surface (212) is in direct contact with the substrate (1), the corresponding one of the plurality of light blocking layers (4) covers the second side surface (213);
each of the plurality of second protrusions (31) is a triangular prism, and the second protrusion (31) further comprises a third side surface (312) and a forth side surface (313); the third side surface (312), the forth side surface (313) and the second transparent surface (311) are connected in sequence; all of the third side surface (312), the forth side surface (313) and the second transparent surface (311) are quadrilateral; the third side surface (312) is in direct contact with the substrate (1), the corresponding one of the plurality of light blocking layers (4) covers the forth side surface (313).

4. The optical element (100) of claim 3, **characterised in that** an angle (α) between the first transparent surface (211) and the second side surface (213) ranges from 30° to 150°; an angle (β) between the second transparent surface (311) and the forth side surface (313) ranges from 30° to 150°.

5. The optical element (100) of claim 3, **characterised in that** a surface roughness of the first transparent surface (211) is less than 0.05µm; a surface roughness of the second side surface (213) ranges from 0.2µm to 30µm; a surface roughness of the second transparent surface (311) is less than 0.05µm; a surface roughness of the forth side surface (313) ranges from 0.2µm to 30µm.

6. The optical element (100) of claim 1, **characterised in that** a parallelism error between the first transparent surfaces (211) and the second transparent surfaces (311) is equal to or less than 0.2°.

7. The optical element (100) of claim 1, **characterised in that** the substrate (1) is integrally formed with the first protrusions (21); the substrate (1) is integrally formed with the second protrusions (31).

8. The optical element (100) of one of claims 1-7, **characterised in that** the blocking layer (4) is any one of ultraviolet absorber, blocking ink, photoresist and blocking tape.

9. Ahead up display (HUD) (500) comprising:
a picture generation unit (PGU) (51) configured for emitting image light (L1);
a light directing assembly (52) configured for receiving and directing the image light (L1); and
the optical element (100) of any one of claims 1 to 8 configured for receiving the image light (L1) from the light directing assembly (52) and projecting the image light (L1) to a projection media (55).

10. The HUD (500) of claim 9 further comprising a housing (53) comprising an accommodating cavity (53a) and a light exit port (53b); a transparent cover (54) is set at the light exit port (53b), and the optical element (100) is set between the transparent cover (54) and the PGU (51).

11. The HUD (500) of claim 9, **characterised in that** each of the first protrusions (21) is a triangular prism, and the first protrusion (21) further comprises a first side surface (212) and a second side surface (213); the first side surface (212), the second side surface (213) and the first transparent surface (211) are connected in sequence; all of the first side surface (212), the second side surface (213) and the first transparent surface (211) are quadrilateral; the first side surface (212) is in direct contact with the substrate (1), the corresponding one of the plurality of light blocking layers (4) covers the second side surface (213).

12. The HUD (500) of claim 11, **characterised in that** an angle (θ) between the image light (L1) and the first transparent surface (211) ranges from 5° to 150°.

13. The HUD (500) of claim 9, **characterised in that** each of the second protrusions (31) is a triangular prism, and the second protrusion (31) further comprises a third side surface (312) and a forth side surface (313); the third side surface (312), the forth side surface (313) and the second transparent surface (311) are connected in sequence; all of the third side surface (312), the forth side surface (313) and the second transparent surface (311) are quadrilateral; the third side surface (312) is in direct contact with the substrate (1), the corresponding one of the plurality of light blocking layers (4) covers the forth side surface (313).

14. The HUD (500) of claim 13, **characterised in that** an angle (γ) between ambient light (L2) and the forth side surface (313) ranges from 5° to 150°.

15. A vehicle (600) comprising:
a body (601) and the head up display (HUD) (500) of any one of claims 9 to 14 setting on the body (601).
